# EUROPEAN PATENT APPLICATION

(11) **EP 4 683 360 A1**
(43) Date of publication of application: **21.01.2026**
(21) Application number: 24382768.0
(22) Date of filing: 16.07.2024
(51) Int. Cl.: H04W 8/18, H04W 8/22, H04W 88/06

(54) **MOBILE DEVICE AND METHOD FOR WIRELESS DATA EXCHANGE**

(71) Applicant: Giesecke+Devrient Mobile Security Germany GmbH, 81677 München (DE)
(72) Inventor: Patiño, David, 81677 Munich (DE); Espi, Sergio, 81677 Munich (DE)
(74) Representative: LKGLOBAL Partnerschaftsgesellschaft mbB

(57) **Abstract**

A mobile device (100) is disclosed. The mobile device exchanges data in a wireless manner. The mobile device includes: an application processor (110); a baseband modem (120); a universal integrated circuit card, UICC, (130), operatively connected to the base-band modem (120) via a first interface (131); and a contactless interface (140), operatively connected to the UICC (130) via a second interface (139). The UICC (130) stores multiple profiles (151, 152, 153, 154), each of which can selectively be in an enabled state or a disabled state. The UICC (130) stores multiple interface modules (161, 162, 163), each of which allows access of one of the profiles (151, 152, 153, 154) stored in the UICC (130) to the contactless interface (140) via the second interface.

## Description

The invention relates to a method and a device for wireless data exchange. In particular, the invention relates to a mobile device which is configured to exchange data with an external unit via a contactless interface, and further relates to a method for such a data exchange.

Mobile devices typically include an application processor which executes the applications of a user and provides a user interface for input and output operations. Furthermore, a mobile device includes a universal integrated circuit card (UICC) which includes at least one profile to provide access to a mobile network and services provided by a mobile network operator. The UICC may be a distinct hardware component like a SIM-card (subscriber identity module card) or the UICC may be provided as an embedded circuit and called eUICC (embedded UICC). In the context of this description, the UICC may generally be referred to as a tamper resistant element. At least one profile is stored in the UICC to grant access to services of a mobile network.

A profile in the UICC may include applications or applets which are executed to provide communication services with external entities. For example, a mobile device may access a mobile network via a baseband modem. Other contactless data exchange services may be accessed via other interfaces like Near Field Communication (NFC). However, access to NFC data exchange services may also be controlled by applications of a profile stored in the UICC.

Some NFC technologies provide limited communication techniques. Especially, when multiple profiles shall get access to NFC devices, there may exist limited options.

Therefore, while current techniques may meet their purpose, there may exist a need to improve the interaction between multiple profiles of a UICC and a contactless NFC interface.

A mobile device and a method are described. It should be understood that features described with reference to the mobile device apply as well to the method, and vice versa.

The components of the mobile device are configured to execute the steps described with reference to the method.

According to an aspect, a mobile device is configured for wireless data exchange. The mobile device comprises an application processor, a baseband modem, a universal integrated circuit card (UICC) operatively connected to the baseband modem via a first interface, and a contactless interface, operatively connected to the UICC via a second interface. The UICC is configured to store multiple profiles, each of which can selectively be in an enabled state or a disabled state The UICC is configured to store multiple interface modules, each of which is configured to allow access of one of the profiles stored in the UICC to the contactless interface via the second interface.

The application processor may execute user applications and may provide the interface for an interaction between a user of the mobile device and the user applications. Furthermore, the application processor may include functional modules to control operation of the mobile device.

The baseband modem provides the air interface for establishing a wireless data exchange connection to a mobile network. The baseband modem may utilize any known mobile communication technology.

The UICC may be a distinct structural component like a SIM-card or an embedded UICC (eUICC). However, the UICC is configured to store multiple profiles.

The profiles stored in the UICC may be profiles of a mobile network operator and may define connection properties of the mobile device to a mobile network. In other words, when one profile of the multiple profiles is enabled, this enabled profile defines the properties of the connection between the mobile device and a mobile network. The baseband modem establishes the connection to the mobile network, and the enabled profile defines the properties of that connection.

The contactless interface provides an additional wireless connection of the mobile device for near field communication (NFC). For example, applications assigned to a profile of the UICC may access the contactless interface to exchange data with a remote unit, for example, for payment applications, ticketing, etc. The contactless interface may be based on RFID technology and may implement an interface in accordance with the NFC-Standards, as defined in ISO/IEC 14443 and/or ISO/IEC 15693.

The interface modules may implement software functionalities required for a profile or an application assigned to a profile to access the contactless interface and exchange data with an external device for the purposes of the NFC technology described above and hereinafter.

Compared to providing a single interface module for accessing the contactless interface, using multiple interface modules in the UICC for different profiles and applications of the profiles may provide increased security when accessing the contactless interface. For example, different profiles do not need to share the same interface module for accessing the contactless interface.

According to an embodiment, the mobile device is configured to assign one interface module to one of the multiple profiles of the UICC.

Assigning an interface module to a profile allows this profile and one or more applications of that profile to access the contactless interface for data exchange of the respective application with an external device, e.g., payment or ticketing applications, etc. In particular, the interface modules and the profiles are assigned to each other in a one-to-one-relation, i.e., one interface module is assigned to exactly one profile, and one profile has assigned exactly one interface module. Thus, one profile can exclusively use a single interface module (and no other interface modules), and this single interface module can only be used by the assigned profile (and not by other profiles).

According to a further embodiment, one interface module is assigned to a single profile of the multiple profiles.

Thus, there is no sharing of interface modules between different profiles of the UICC for accessing the contactless interface. When another profile of the UICC is in the enabled state, another interface module is used for accessing the contactless interface via the second interface. Data or information stored in the interface module assigned to a first profile are not accessible to a second profile, because the second profile uses another interface module for accessing the contactless interface.

According to a further embodiment, at least one profile of the multiple profiles has no assigned interface module.

Thus, one those profiles of the UICC are assigned an interface module for accessing the contactless interface which include applications that need access to the contactless interface. For example, when a mobile device includes different user profiles in the UICC and one of these profiles is for mobile data transmission only without requiring access to the near field communication, this profile does not need to be assigned with an interface module for accessing the contactless interface. This approach allows efficiently using the available resources (i.e., number of interface modules) by the profiles that need the respective functionality, and keeping the number of interface modules in the UICC on a minimum required level.

According to a further embodiment, the mobile device is configured to install an additional profile in the UICC.

According to a further embodiment, the mobile device is configured to assign an interface module to the additional profile.

This allows for an additional profile to be provided and installed in the UICC after manufacturing the UICC and allow the additionally installed profile to access the contactless interface by assigning an interface module to the additionally installed profile.

Generally, a profile may be installed to the UICC during manufacturing the UICC and/or the mobile device directly by the device manufacturer or by a mobile network operator. However, the additional profile may also be installed when a user puts the mobile device into operation or at any stage during using the mobile device. For example, the additional profile may be transmitted to the mobile device via a mobile network and be installed in the UICC.

According to a further embodiment, an assigned interface module remains assigned to a profile as long as a profile is stored in the UICC.

When a profile requires access to the contactless interface and, consequently, an interface module is assigned to that profile, the assignment between said profile and said interface module remains for the entire lifetime of a profile, i.e., the interface module remains assigned to said profile as long as the profile is available in the UICC.

According to a further embodiment, the mobile device is configured to remove a profile from the UICC.

According to a further embodiment, the mobile device is configured to determine whether a removed profile was assigned to an interface module, and, when the removed profile was assigned to an interface module, reset the interface module that was assigned to the removed profile.

The mobile device allows additional profiles to be installed as well as removing or deinstalling profiles from the UICC. When a profile is assigned to an interface module, this assignment remains for the entire lifetime of the profile and no other profile gets access to the contactless interface via the same interface module. However, in order to be able to re-use interface modules, an interface module is reset to a default state when the profile that is assigned to said interface module is removed from the UICC. This reset interface module can now be re-assigned to another profile, e.g., a profile that is loaded into the UICC or a profile that is already present in the UICC. The default state of the interface module relates to an interface module as it is before it is assigned to a profile. When a profile is assigned to an interface module and accesses the contactless interface via the interface module, the profile may store information in the interface module. However, the information stored in the interface module only applies to the assigned profile. When the interface module is assigned to another profile, the interface module should contain no remainder of the data stored in the interface module by another profile. This approach increases the security and separates the access of different profiles to the contactless interface.

According to a further embodiment, the mobile device is configured to assign the reset interface module to a profile of the multiple profiles stored in the UICC.

This approach allows re-using interface modules and make an efficient use of the available resources.

According to a further embodiment, at least some of the multiple interface modules are vacant and not assigned to a profile before taking the mobile device into operation.

Thus, the UICC includes a pool of interface modules which are not assigned to a profile during the manufacturing process, and which are available for assignment by a user of the mobile device. Providing the interface modules during a manufacturing process enables that configuration parameters are provided in accordance with specific software functionality implemented by a specific interface module.

According to a further embodiment, an interface module, when assigned to one of the multiple profiles, remains assigned to that one profile in either state of the one profile.

For example, when a first interface module is assigned to a first profile, this link (assignment between interface module and profile) is permanently kept as long as the profile is installed in the UICC, and independent of the state of a profile. Whether a profile is enabled or disabled, the interface module remains assigned to that profile.

According to a further embodiment, the mobile device is configured to establish a communication link between an interface module that is assigned to a profile and the second interface.

Thus, the mobile device determines which interface module and, as a consequence, which profile, has access to the second interface of the UICC and to the contactless interface. The mobile device, e.g., an application being executed on the application processor, controls which interface module and which profile has access to the contactless interface via the second interface. In other words, one interface module can be selectively put into a communication connection with the second interface to exchange data with the contactless interface.

Typically, when having a pool of interface modules, only those interface modules are connected to the second interface which are assigned to a profile. The interface modules which are in the pool but not assigned to a profile have no need for being assigned to the second interface.

According to a further embodiment, at a given point in time, only one interface module has an established communication link to the second interface.

Thus, no more than one interface module has access to the second interface and to the contactless interface at a given time. There is an exclusive communication link between the contactless interface and a selected one of the interface modules as well as a profile of the UICC.

According to a further aspect, a method for wireless data exchange between a mobile device and an external unit is provided. The method includes: providing multiple profiles in a UICC of the mobile device; providing multiple interface modules in the UICC of the mobile device; assigning at least one of the multiple interface modules to one of the multiple profiles, respectively; and assigning the at least one of the multiple interface modules to a second interface of the UICC, thereby enabling data exchange between the at least one of the multiple interface modules and a contactless interface of the mobile device.

According to the method, interface modules and profiles in the UICC are assigned to each other such that there is a unique link between one interface module and one profile. A profile gets access to the contactless interface via the assigned interface module and the second interface. During operation of the mobile device, no more than one interface module is linked to the second interface such that no more than one profile can access the contactless interface at a time. However, the mobile device may re-assign the second interface to another interface module to allow another profile to access the contactless interface.

Embodiments of the invention are described with reference to the drawings. Same reference signs relate to same or similar structural or functional components.

It is shown in:
- Fig. 1: a schematic representation of a mobile device according to an embodiment;
- Fig. 2: a schematic representation of the mobile device of Fig. 1 providing additional details relating to the profile and interface module management in the UICC;
- Fig. 3: a schematic representation of a method for wireless data exchange between a mobile device and an external unit.

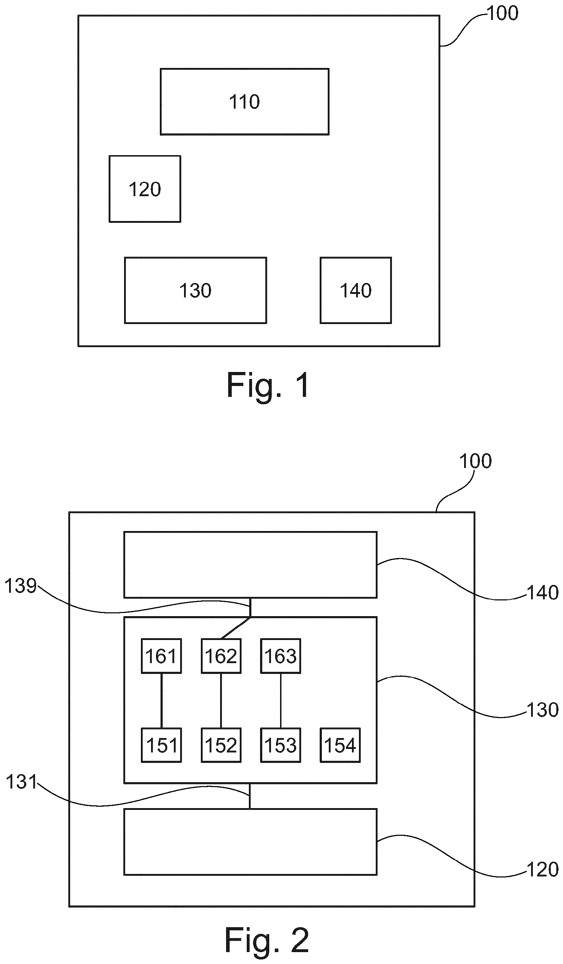

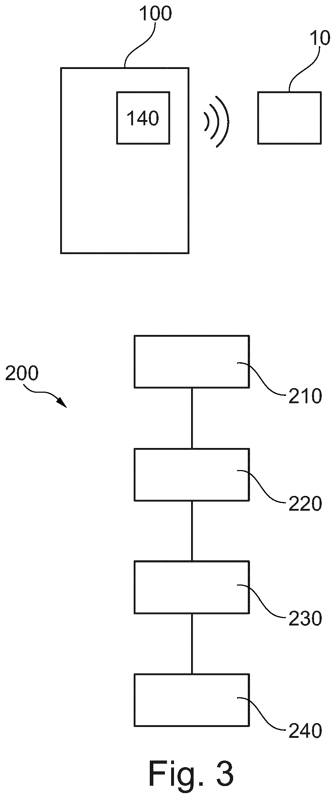

Fig. 1 shows a mobile device 100. The mobile device 100 comprises an application processor 110, a baseband modem 120, a UICC 130 (e.g., an eUICC), and a contactless interface 140 (e.g., an NFC chip) for exchanging data with an external unit 10 (see Fig. 3) via the NFC protocol.

The baseband modem 120 provides access to a mobile network, in accordance with known techniques. For accessing the mobile network, the baseband modem may require access to at least one profile stored in the UICC 130.

The application processor 110 is configured to execute user applications like telecommunication applications, secure applications like payment, banking, ticketing, or the like, and non-secure applications. Some of these applications that are executed by the application processor 110 require access to the baseband modem 120 and/or to the contactless interface 140. Some applications running on the application processor 110 may directly access the contactless interface 140, other applications running on the application processor may get access to the contactless interface 140 via applets that are part of the profiles stored in the UICC 130.

Fig. 2 shows the functional interrelation between the baseband modem 120, the UICC 130, and the contactless interface 140, together with the profiles 151, 152, 153, 154 and the interface modules 161, 162, 163 that are stored in the UICC 130.

A first interface 131 interconnects the baseband modem 120 and the UICC. The first interface operates in accordance with the mechanisms set out in ISO 7816. This is a wired connection between the baseband modem 120 and the UICC 130 in the mobile device 100.

A second interface 139 connects the UICC 130 with the contactless interface 140. However, in the UICC, one of multiple interface modules 161, 162, 163 is assigned to the second interface 139. In the example of Fig. 2, the interface module 162 is assigned to the second interface 139, so that the profile 152 can access the contactless interface 140 via the interface module 162 and the second interface 139.

Turning now to the UICC 130, this component includes multiple profiles 151, 152, 153, 154. Each of these profiles can be in an enabled state or a disabled state. The mobile device 100 may transition each profile from the enabled state to the disabled state, or vice versa, based on a user input or a remote command, for example. In particular, a profile must be in the enabled state for it to be granted access to the contactless interface 140 via its assigned interface module. A disabled profile cannot get access to the contactless interface 140 even if the disabled profile has assigned an interface module.

An interface module 161, 162, 163 is assigned to a profile 151, 152, 153, 154. As can be seen in Fig. 2, the number of interface modules may differ from the number of profiles in the UICC. However, interface modules and profiles are assigned to one another in an one-to-one relationship. That is, a certain profile can have no interface module assigned, like profile 154. Profile 154 cannot access the contactless interface 140. Or a certain profile has exactly one interface module assigned, like profile 151 (assigned to interface module 161), profile 152 (assigned to interface module 162), and profile 153 (assigned to interface module 163).

The UICC may comprise a pool of interface modules, but not every interface module must be assigned to a profile. Rather, the UICC may comprise vacant interface modules that are assigned to a profile at a later stage, e.g., when an additional profile is installed to the UICC and this profile requires access to the contactless interface 140. When a profile has assigned an interface module and this profile is removed from the UICC, the assigned interface module is released and reset to a default state. When being reset to the default state, the interface module can be re-assigned to another profile. As long as a profile is stored in the UICC and has assigned an interface module, this interface module is not assigned to another profile. An interface module may be kept assigned to a profile as long as the profile is stored in the UICC. Alternatively, when a profile does not need access to the contactless interface, the interface module may be released from the profile, reset to the default state, and re-assigned to another profile.

In the context of the embodiment shown in Figs. 1 and 2, an exemplary use case with reference to particular implementation details of this example is described in the following.

For an eUICC 130, it is possible that there are applications that are part of the mobile network operator (MNO) profile 151, 52, 153, 154 that are contactless applications requiring access to the contactless interface 140. The handling of such contactless applications that are part of a profile and how they are configured is defined in GlobalPlatform Card Specification Amd C. Such contactless applications in the eUICC 130 are capable to exchange commands with an external contactless terminal like the external unit 10 via a component called contactless front-end (CLF) or Near Field Communication Controller (NFCC), i.e., via the contactless interface 140, which is in charge of handling the contactless protocol between the mobile device 100 and the external unit 10.

The physical interface used to connect the eUICC 130 with the CLF/NFCC 140 is called single wire protocol (SWP) and is defined in ETSI TS 102.613. Only those contactless applications of the profiles that are in ACTIVATED state (according to GlobalPlatform Card Specification Amd C) are technically enabled to receive commands from a contactless terminal 10 and respond to them.

The introduction in GSMA of the Multiple Enabled Profiles (MEP) feature brings the possibility of having at least two MNO profiles 151, 152, 153, 154 in an eUICC 130 enabled at the same time. There may be the case that there are contactless applications in ACTIVATED state in both enabled profiles, e.g., in Fig. 2, the profiles 151 and 152 may be in ACTIVATED state.

However, there is a technical limitation in both GlobalPlatform Card Specificatoin Amd C and in current CLF/NFCC chips that prevents such scenarios. Therefore, only one of the profiles is capable to have contactless applications in ACTIVATED state and exchange data with the CLF 140. For that reason, ETSI introduced in ETSI TS 102.221 the feature called "assign SWP" in MANAGE LSI command to provide a mechanism to the baseband modem 120 to grant access to SWP interface to a given LSI (Logical Secure Element Interface). Each LSI could be assumed that is an enabled MNO profile. It should be noted that ETSI defines generic mechanisms, such as the LSI, and there is no explicit definition that this is used for MNO profiles. GSMA Specifications made use of the LSI mechanism to define and specify the MEP feature.

In accordance with the example described herein, it is proposed to define a mechanism used by the baseband modem 120 to perform an agile and straightforward management of such situations, potentially with the support of some additional mechanism in the eUICC 130.

For example, the MNO profiles 151, 152, 153, 154 that are downloaded in an eUICC 130 can be configured as defined in the TCA Interoperable Profile Package specification (TCA IPP). It is possible to configure contactless applications of a profile downloaded to the eUICC 130.

There are contactless technologies that are massively used today (such as MIFARE owned by NXP, FeliCa owned by FeliCa Networks, etc.) that require some additional support of specific features that must be supported in the operating system of the mobile device 100. For instance, MIFARE Classic technology requires additional and dedicated memory storage (so-called Virtual Card) that is accessible via javacardx.external.Memory Access JavaCard API. However, the configuration of such contactless technologies cannot be done with the current definition of the TCA IPP specification.

In accordance with an example described herein, it is proposed to define a mechanism for assigning the contactless interface 140 to a certain profile of the eUICC 130 that enables that accessing the contactless interface 140 by the applications of a certain profile is available in MNO profiles. Such mechanism shall only be available for those MNO profiles that require that the eUICC 130 must support contactless functions, i.e., contactless access to an external unit 10 via the contactless interface 140. The functionality of the interface modules 161, 162, 163 follow the lifecycle and the state of the respectively assigned MNO profile 151, 152, 153, 154 (e.g. enabled, disabled, deleted, etc.)

The mobile device 100 and the eUICC 130 are configured such that multiple interface modules 161, 162, 163 are available and each of these interface modules can be assigned to profile 151, 152, 153, 154 of the eUICC for enabling contactless functionality.

When a profile 151, 152, 153, 154 is successfully downloaded to the eUICC 130, one dedicated interface module 161, 162, 163 is allocated per profile that is supposed to support contactless functionality. When a profile is deleted, the interface module assigned to this profile is also deleted. This interface module may be reset to a default state.

In order to access the contactless interface 140, a profile 151, 152, 153, 154 of the eUICC 130 must be in the enabled state, and the profile needs to be assigned to the SWP. A profile that meets both requirements (enabled state, SWP assigned) has access to the second interface 139 and can exchange commands and data with the contactless interface 140.

Fig. 3 shows an example of a method 200 for wireless data exchange between a mobile device 100 (as the mobile device 100 of Figs. 1 and 2 having a contactless interface 140) and an external unit 10.

The method 200 includes the following steps:
In a first step 210, providing multiple profiles 151, 512, 153, 154 in a UICC 130 of the mobile device 100. In a second step 220, providing multiple interface modules 161, 162, 163 in the UICC 130 of the mobile device 100. In a third step 230, assigning at least one of the multiple interface modules 161, 162, 163 to one of the multiple profiles, respectively. In a fourth step 240, assigning the at least one of the multiple interface modules 161, 162, 163 to a second interface 139 of the UICC 130, thereby enabling data exchange between the at least one of the multiple interface modules 161, 162, 163 and a contactless interface 140 of the mobile device.

The steps of the method correspond to the functions of the mobile device 100 described with reference to Figs. 1 and 2. Therefore, the functions described with reference to the mobile device 100 can be implemented as method steps.

### List of reference signs

- 10: external unit
- 100: mobile device
- 110: application processor
- 120: baseband modem
- 130: universal integrated circuit card, UICC
- 131: first interface, ISO 7816
- 139: second interface, single wire protocol
- 140: contactless interface, contactless front-end, CLF
- 151-154: profiles for a mobile network connected to via the baseband modem
- 161-163: interface modules for access to second interface

## Claims

1. A mobile device (100), configured for wireless data exchange, the mobile device (100) comprising:
an application processor (110);
a baseband modem (120);
a universal integrated circuit card, UICC, (130), operatively connected to the baseband modem (120) via a first interface (131); and
a contactless interface (140), operatively connected to the UICC (130) via a second interface (139);
wherein the UICC (130) is configured to store multiple profiles (151, 152, 153, 154), each of which can selectively be in an enabled state or a disabled state;
wherein the UICC (130) is configured to store multiple interface modules (161, 162, 163), each of which is configured to allow access of one of the profiles (151, 152, 153, 154) stored in the UICC (130) to the contactless interface (140) via the second interface.

2. The mobile device (100) of claim 1,
wherein the mobile device (100) is configured to assign one interface module (161, 162, 163) to one of the multiple profiles (151, 152, 153, 154) of the UICC.

3. The mobile device (100) of claim 1 or 2,
wherein one interface module (161, 162, 163) is assigned to a single profile of the multiple profiles (151, 152, 153, 154).

4. The mobile device (100) of any one of the preceding claims,
wherein at least one profile of the multiple profiles (151, 152, 153, 154) has no assigned interface module (161, 162, 163).

5. The mobile device (100) of any one of the preceding claims,
wherein the mobile device (100) is configured to install an additional profile in the UICC (130).

6. The mobile device (100) of claim 5,
wherein the mobile device (100) is configured to assign an interface module (161, 162, 163) to the additional profile.

7. The mobile device (100) of any one of claims 2 to 6,
wherein an assigned interface module (161, 162, 163) remains assigned to a profile as long as a profile is stored in the UICC (130).

8. The mobile device (100) of any one of the preceding claims,
wherein the mobile device (100) is configured to remove a profile from the UICC (130).

9. The mobile device (100) of claim 7,
wherein the mobile device (100) is configured to determine whether a removed profile was assigned to an interface module (161, 162, 163), and, when the removed profile was assigned to an interface module (161, 162, 163), reset the interface module (161, 162, 163) that was assigned to the removed profile.

10. The mobile device (100) of claim 9,
wherein the mobile device (100) is configured to assign the reset interface module to a profile of the multiple profiles stored in the UICC.

11. The mobile device (100) of any one of the preceding claims,
wherein at least some of the multiple interface modules (161, 162, 163) are vacant and not assigned to a profile before taking the mobile device into operation.

12. The mobile device (100) of any one of the preceding claims,
wherein an interface module, when assigned to one of the multiple profiles, remains assigned to that one profile in either state of the one profile.

13. The mobile device (100) of any one of the preceding claims,
wherein the mobile device (100) is configured to establish a communication link between an interface module (161, 162, 163) that is assigned to a profile and the second interface (139).

14. The mobile device (100) of claim 13,
wherein, at a given point in time, only one interface module (161, 162, 163) has an established communication link to the second interface (139).

15. A method (200) for wireless data exchange between a mobile device (100) and an external unit (10), the method comprising:
providing (210) multiple profiles (151, 512, 153, 154) in a UICC (130) of the mobile device (100);
providing (220) multiple interface modules (161, 162, 163) in the UICC (130) of the mobile device (100);
assigning (230) at least one of the multiple interface modules (161, 162, 163) to one of the multiple profiles, respectively;
assigning (240) the at least one of the multiple interface modules (161, 162, 163) to a second interface (139) of the UICC, thereby enabling data exchange between the at least one of the multiple interface modules (161, 162, 163) and a contactless interface (140) of the mobile device.
